# EUROPEAN PATENT SPECIFICATION

(11) **EP 2 056 595 B1**
(45) Date of publication and mention of the grant of the patent: **09.10.2013**
(21) Application number: 08162496.7
(22) Date of filing: 18.08.2008
(51) Int. Cl.: H04N 5/445

(54) **Method for providing multimedia content list and sub-list, and broadcast receiving apparatus using the same**
Verfahren zur Bereitstellung der Liste und Unterliste mit Multimedia-Inhalt und Rundfunkempfangsvorrichtung damit
Procédé pour fournir une liste et sous-liste de contenu multimédia, et appareil de réception de diffusion l'utilisant

(30) Priority: 05.11.2007 KR 20070112143
(43) Date of publication of application: 06.05.2009
(73) Proprietor: Samsung Electronics Co., Ltd., Suwon-si, Gyeonggi-do, 443-742 (KR)
(72) Inventor: Kim, Ji-eun, Yongin-si Gyeonggi-do (KR); Jo, Sung-baik, Suwon-si Gyeonggi-do (KR); Park, Ji-hyun, Seoul (KR); Kim, Il-kown, Suwon-si Gyeonggi-do (KR); Kim, Joon-hwan, Yongin-si Gyeonggi-do (KR); Kim, Hyun-jin, Seoul (KR)
(74) Representative: Fearnside, Andrew Simon

(56) References cited:
- WO-A-2007/091781
- US-A1- 2003 237 097
- US-A1- 2006 117 260

## Description

### BACKGROUND OF THE INVENTION

### 1. Field of the Invention

Apparatuses and methods consistent with the present invention relate to providing a multimedia content list and a sub-list, and a broadcast receiving apparatus which provides the same.

### 2. Description of the Related Art

In the related art, broadcast program information is generally supplied via newspapers, televisions (TVs) or magazines. However, digital multi-channel broadcasting provides scores of channels, so viewers have a choice between a plethora of programs. This makes the task of selecting programs complicated. Digital multi-channel broadcasting provides an electronic program guide (EPG), which provides program tables or information regarding each program.

Technological developments have enabled TVs to provide a wide range of functions, including receiving and displaying broadcasts.

For example, as a result of the popularization of Internet communications, TVs have come to be provided with access to Internet networks. Accordingly, it becomes possible to use Internet services, such as Internet TV, in TVs. Therefore, users can view video stored in external sources on TVs using the Internet.

TVs are also able to schedule recording of broadcast programs. Accordingly, users can record broadcast programs provided via various channels, and play back the recorded broadcast programs, so a user may view desired broadcast programs at any time.

However, since such multimedia services using TVs are received via various routes, it may be difficult for users to know which programs are available. Additionally, users need to search for each recorded broadcast program separately to play back the program, which causes inconvenience.

Therefore, there is a need for methods by which the user may use TV multimedia content more conveniently.

US 2006/0117260 describes grouping of representations in a user interface. The method includes distinguishing a plurality of on-demand content items from a plurality of time-dependent content items that are described in data. A plurality of linearly-arranged groupings is formed, based on the distinguishing, for output in a user interface. At least one of the groupings includes representations of time-dependent content items that are available via a particular channel. Another one of the groupings includes representations of on-demand content items that are available via plurality of channels.

### SUMMARY OF THE INVENTION

Exemplary embodiments of the present invention aim to overcome the above disadvantages and other disadvantages not described above.

The exemplary embodiments of the present invention also provide a method for providing a sub-list of programs selected using electronic program guide (EPG) information, and a broadcast receiving apparatus using the method.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a schematic view of a TV system according to an exemplary embodiment of the present invention;
FIG. 2 is a detailed block diagram of a TV shown in FIG. 1;
FIG. 3 is a flowchart explaining a method for providing a multimedia content list, according to an exemplary embodiment of the present invention;
FIG. 4 is a flowchart explaining a method for providing a sub-list to play back a recorded program, according to another exemplary embodiment of the present invention;
FIG. 5 is a diagram of a multimedia content list according to an exemplary embodiment of the present invention; and
FIG. 6 is a diagram of sub-lists displayed for each playback time of recorded program files, according to another exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

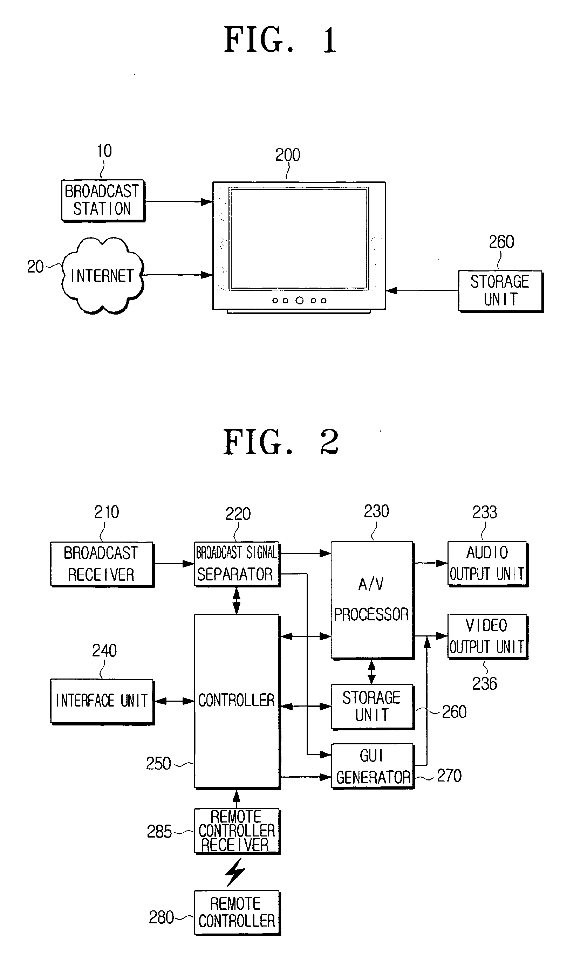

FIG. 1 is a schematic view of a TV system according to an exemplary embodiment of the present invention. In the TV system of FIG. 1, multimedia content may be provided from a storage unit (not shown) in a TV 200, a broadcast station 10 which transmits broadcast signals, and the Internet 20.

The TV 200 may receive the broadcast signals from the broadcast station 10, and display the received broadcast signals. Additionally, the TV 200 may receive EPG information from the broadcast station 10, and generate a broadcast program list based on the EPG information.

The TV 200 may download a video file from the Internet 20, or may download real time streams in order to play back video. The TV 200 may play back video files stored in the storage unit (not shown) in the TV 200.

Accordingly, a user may be provided with TV multimedia content via various routes.

Hereinafter, the configuration of the TV 200 will be described in detail with reference to FIG. 2. FIG. 2 is a detailed block diagram of the TV 200 shown in FIG. 1.

The TV 200 of FIG. 2 comprises a broadcast receiver 210, a broadcast signal separator 220, an audio/video (A/V) processor 230, an audio output unit 233, a video output unit 236, an interface unit 240, a controller 250, a storage unit 260, a graphical user interface (GUI) generator 270, a remote controller receiver 285 and a remote controller 280.

The broadcast receiver 210 receives a broadcast from a broadcast station or a satellite via a cable or wirelessly, and demodulates the received broadcast. The broadcast receiver 210 may comprise a plurality of tuners (not shown) in order to simultaneously receive broadcast signals through a plurality of channels.

The broadcast signal separator 220 separates the broadcast signal output from the broadcast receiver 210 into a video signal, an audio signal and EPG information. The broadcast signal separator 220 transmits the video signal and audio signal to the A/V processor 230, and the EPG information signal to the GUI generator 270.

The A/V processor 230 performs signal processing, such as video decoding, video scaling, audio decoding or the like, with respect to video and audio signals output from the broadcast signal separator 220 and the interface unit 240. Additionally, the A/V processor 230 transmits the video signal and the audio signal to the video output unit 236 and the audio output unit 233, respectively.

Alternatively, if the video and audio signal are stored in the storage unit 260, or transmitted to an external device via the interface unit 240, the AN processor 230 outputs the video and audio signal in compressed format to the storage unit 260 or to the interface 240.

The audio output unit 233 may output the audio signal transmitted from the A/V processor 230 through a speaker, or may output the audio signal to an external device (for example, an external speaker) which is connected through an external output terminal.

The video output unit 236 may display the video output from the A/V processor 230 on the display, or may output the video to an external device (for example, an external display) which is connected through an external output terminal.

The interface unit 240 may connect the TV 200 to the Internet 20. Additionally, the interface unit 240 may receive video files from the Internet 20, and may transmit the received video files to the controller 250.

The storage unit 260 may record the broadcast program received by the broadcast receiver 210, and store the recorded broadcast program as a recorded program file that is a video file. The storage unit 260 may also store a video file copied by the user. Additionally, the storage unit 260 may output the video files stored therein to the AN processor 230. The storage unit 260 may be a hard disk drive (HDD) or a nonvolatile memory.

The GUI generator 270 may generate a GUI to be shown on a screen of the TV 200, and add the generated GUI to video output from the A/V processor 230. The GUI generator 270 may receive EPG information and generate a GUI for showing broadcast program information using the received EPG information.

The remote controller 280 may receive commands input by a user and transmit the received user commands to the TV 200 via the remote controller receiver 285. The user may select a program which he or she desires to schedule for recording, and also may set the playback time to play back the recorded program file, using the remote controller 280.

The controller 250 may recognize user commands input by the user transferred from the remote controller 280, and control the entire operation of the TV 200 in response to the user commands.

The controller 250 may generate a broadcast program list using the EPG information received from the broadcast station 10. Additionally, the controller 250 may extract a video file list of video files, which are stored in the storage unit 260 or in an external device connected to the TV via the Internet 20. Furthermore, the controller 250 may control the GUI generator 270 to generate a GUI indicating a multimedia content list comprising the generated broadcast program list and the extracted video file list.

Here, the broadcast program list comprises information regarding the title, broadcast time and contents of broadcast programs transmitted from the broadcast station 10. Such information regarding the broadcast program is contained in the EPG information transmitted from the broadcast station 10.

The video file list may include a list of video files stored in the storage unit 260 of the TV 200, or include a list of video files stored in the external device (for example, a web server or a file server) which is connected to the TV 200 via the Internet 20.

Additionally, the video file list may also include video files stored in an external device connected to the TV 200 via communication networks other than the Internet 20. For example, video files stored in a computer connected via a local area network (LAN) or a wide area network (WAN) may be contained in the video file list.

When the video file list is displayed, each external device or storage medium in the external device may be listed separately in the video file list. Alternatively, the built-in storage media or the connected external devices may be listed collectively in the video file list.

If the external device is connected via the Internet 20, the video file list may be displayed so that each list item may refer to each web site.

The controller 250 may receive a user's selection of programs from the generated broadcast program list, and generate one or more sub-lists containing the selected programs. Additionally, the controller 250 may cause the sub-lists and the programs in the sub-lists to be displayed on the screen of the TV 200.

The sub-list refers to a sub-list from the broadcast program list wherein the broadcast programs selected by the user from the broadcast program list are arranged according to channels optionally set by the user. Since the sub-list includes the broadcast programs selected by the user, the sub-list may function as a list of user's channels. In more detail, if the user selects programs to be included in the sub-list and sets the playback time of the selected programs, the controller 250 may cause the recorded program files containing the programs to be played back at the set playback time. Accordingly, the user can view video played back on the channel set by the user without any further manipulation.

GUIs representing sub-lists may have the same form as or a similar form to a GUI representing a broadcast program list. In other words, programs selected by a user are displayed according to the user's selected list of channels and playback time of the selected programs in the sub-lists, in the same manner as broadcast programs are arranged according to the channel and broadcast time in the broadcast program lists.

Specifically, when the selected programs are broadcast, the controller 250 may control the storage unit 260 to record the currently broadcast programs and store the recorded programs as recorded program files.

Additionally, the controller 250 may set the playback time of the programs contained in each sub-list, and cause the recorded program file, the playback time of which is set to be the current time, to be played back.

According to the control of the controller 250, the sub-lists and programs contained in each sub-list may be caused to appear on the screen in such a manner that the programs in each sub-list are shown sequentially in the order of the set playback time.

If the user inputs a specific time to play back a program, the controller 250 may set the playback time of the program to be the specific time, and if not, the controller 250 may automatically set a time unassigned as a playback time to be the playback time of the program. Additionally, the set playback time may be changed by the user.

According to the control of the controller 250, the sub-lists and programs contained in each sub-list may be caused to appear on the screen in the order of the viewing frequency of the programs in the sub-lists or in the order of the number of programs in the sub-lists. Additionally, the controller 250 may cause the sub-lists to be displayed in the order of the current viewing rate of the programs in the sub-lists or in an order set by the user.

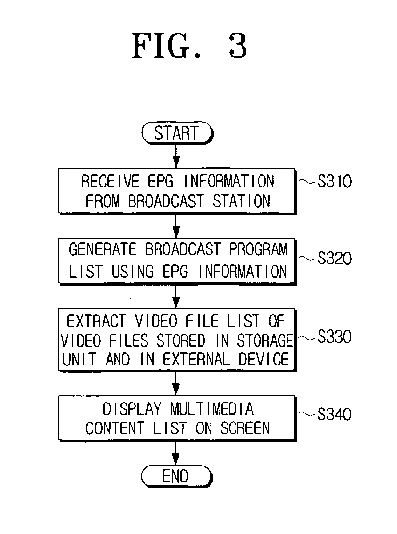

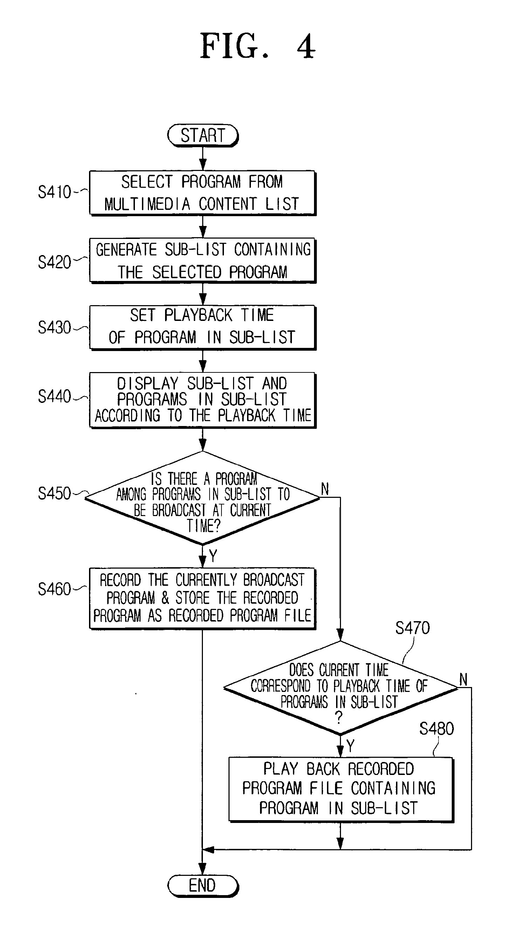

Hereinafter, operations of the controller 250 will be described in detail with reference to FIGS. 3 and 4. FIG. 3 is a flowchart explaining a method for providing a multimedia content list, according to an exemplary embodiment of the present invention.

The broadcast receiver 210 receives EPG information from the broadcast station 10 (operation S310). In more detail, the broadcast receiver 210 receives a broadcast signal from the broadcast station 10, and the broadcast signal separator 220 then separates the EPG information from the broadcast signal and transmits the separated EPG information to the controller 250.

The controller 250 then controls the GUI generator 270 to generate a broadcast program list using the received EPG information (operation S320).

The controller 250 extracts a video file list of video files stored in the storage unit 260 or in the external device connected to the TV 200 via the interface unit 240 (operation S330).

The controller 250 selects at least one file among the video files stored in the storage unit 260, and adds the selected files to the video file list. In this situation, the controller 250 may cause a video file with the highest viewing frequency or a video file selected by the user to be selected from the storage unit 260 and added to the video file list.

Additionally, the controller 250 may add video files stored in an external device connected to the Internet 20 via the interface unit 240 to the video file list. Here, the controller 250 may cause video files freely provided from each web site or video files recommended by web sites to be added to the video file list.

The controller 250 may also add video files stored in an external device connected via communication networks other than the Internet 20 to the video file list. For example, the controller 250 may add video files stored in a computer connected to the TV 200 via a home network to the video file list.

The controller 250 may cause a multimedia content list including a combination of the broadcast program list and the extracted video file list to be displayed on the screen (operation S340). Accordingly, the user can check not only the broadcast program list but also the video file list of the external device using the multimedia content list, so it is possible to select multimedia content more conveniently.

Hereinafter, a sub-list of recorded programs arranged in the order of the playback time will be described in detail with reference to FIG. 4. FIG. 4 is a flowchart explaining a method for providing a sub-list to play back recorded programs, according to another exemplary embodiment of the present invention.

The controller 250 receives a user selection of a program from the multimedia content list (operation S410). In more detail, the user may select a program from the multimedia content list using the remote controller 280 while the multimedia content list is displayed on the screen.

The controller 250 generates a sub-list containing the selected program (operation S420). Here, the user may select programs which the user desires to schedule for recording and view later, and the controller 250 may then make a list of the programs selected by the user as a sub-list.

The controller 250 may set the playback time of the programs contained in the sub-list (operation S430). Specifically, after selecting the programs, the user may set the time to play back the recorded programs. However, if the user does not set the playback time, the controller 250 may set an unassigned time to be the playback time of the selected programs.

The controller 250 may then display the sub-list and the programs contained in the sub-list according to the playback time on the screen (operation S440). In other words, the controller 250 may display the programs scheduled for recording by the user in the order of the time that the programs are to be played back.

The controller 250 determines whether there is a program to be broadcast at the current time from among the programs in each sub-list (operation S450). If it is determined that a currently broadcast program exists (operation S450-Y), the controller 250 may control the storage unit 260 to record the currently broadcast program and store the recorded program as a recorded program file (operation S460).

Alternatively, if it is determined that there is no currently broadcast program from among the programs in the sub-list (operation S450-N), the controller 250 may determine whether the current time corresponds to the playback time of the programs in the sub-list (operation S470).

If it is determined that there is a program to be played back at the current time (operation S470-Y), the controller 250 may play back the recorded program file containing the program (operation S480).

The user may thereby select a program from the multimedia content list in order to schedule recording of the selected program, and the selected program along with its playback time may then be registered in the sub-list.

Accordingly, after scheduling recording of a desired program, the user may be provided with his own channel so that the desired program can be automatically played back at a desired time.

Although the user may select only the broadcast programs from the multimedia content list in this exemplary embodiment of the present invention, the user may also select video files from the video file list.

For example, if a video file stored at "YAHOO.COM" is selected from the video file list, the controller 250 may set the playback time of the selected video file and add the set playback time to the sub-list.

The processes of providing the multimedia content list and sub-list according to the operations of the controller 250 have been described with reference to FIGS. 3 and 4.

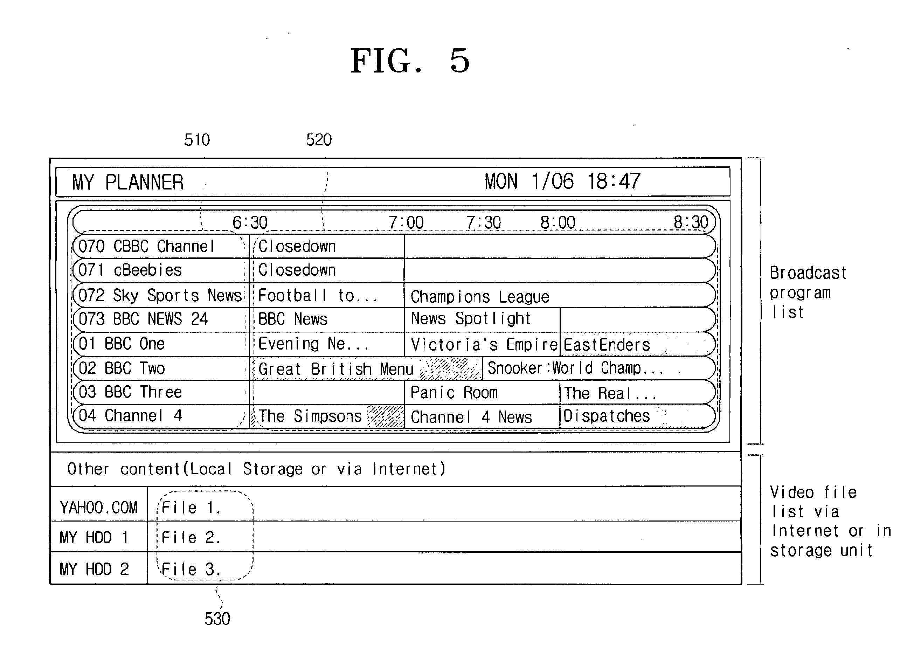

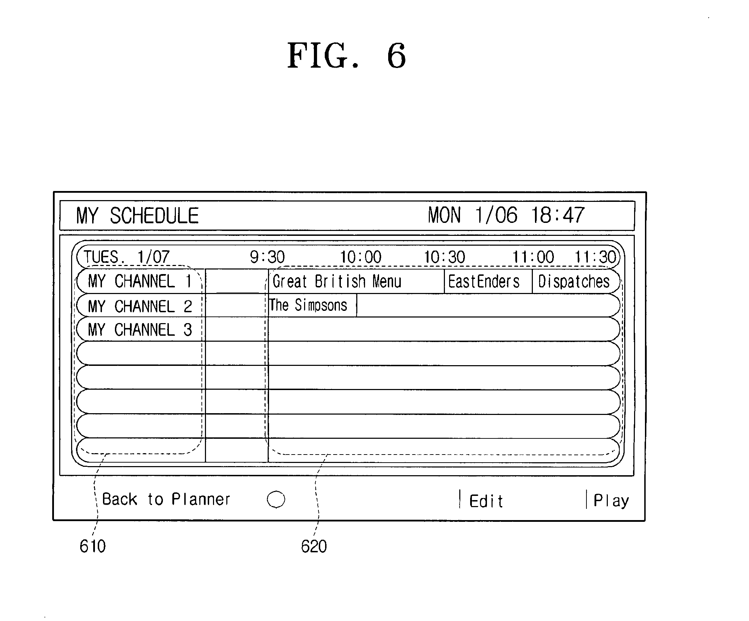

Hereinafter, the configuration of the multimedia content list and the sub-list will be described in detail with reference to FIGS. 5 and 6. FIG. 5 shows the configuration of the multimedia content list according to an exemplary embodiment of the present invention.

The multimedia content list of FIG. 5 is named "MY PLANNER". The multimedia content list is configured using the EPG information.

The multimedia content list is divided into a channel display field 510, a program display field 520 and a video file list display field 530.

The channel display field 510 and program display field 520 of FIG. 5 relate to the broadcast program list.

The channel display field 510 shows numbers and names of channels, and the program display field 520 displays various programs according to channels and time slots. For example, as shown in FIG. 5, "Evening Ne..." will be broadcast on channel "01 BBC One" between 6:30 to 7:00.

The video file list display field 530 shows a video file list of video files provided via the Internet 20 or stored in the storage unit 260. Referring to FIG. 5, File 1 is provided from "YAHOO.COM" via the Internet 20. Additionally, File 2 is provided from "MY HDD 1", which is a built-in storage device, and File 3 is provided from "MY HDD 2".

In the video file list display field 530 of FIG. 5, each list item may refer to each web site or storage device, in the same manner that each program corresponds to a respective channel. Alternatively, each list item may generally indicate the Internet or to all the storage devices.

Accordingly, the user may check both the broadcast program list and video file list at once, and it is thus possible to select content with greater convenience.

If the user selects a desired channel, only the selected channel and program corresponding to the selected channel may appear on the channel display field 510 and program display field 520. Additionally, the channels may be arranged in the order of the viewing frequency of the channels, in the order of the current viewing rate of the channels, in the order of the number of programs selected by the user, or in an order set by the user.

To achieve this, the controller 250 may control the storage unit 260 to store information regarding the viewing frequency for each channel and the period of viewing time. The controller 250 may then determine the order of the viewing frequency of the channels and the order of the current viewing rate of the channels, based on the information stored in the storage unit 260.

The channel display field 510 and program display field 520 may include a menu to automatically recommend a frequently viewed channel. In more detail, the controller 250 may control the viewing frequency to be recorded for each channel so that the channel with the highest viewing frequency may be recommended to be a frequently viewed channel.

Additionally, the channel display field 510 and program display field 520 may provide an automatic view function for automatically displaying important programs or broadcasts of special events, such as a soccer game or news, which the user intends to view at the broadcast time. When the current time reaches the broadcast time of a program for which the automatic view function is established, the controller 250 may change the current channel to the channel on which the program for which the automatic view function is established is to be broadcast, even when the user is currently viewing a broadcast on another channel. Alternatively, the controller 250 may cause a message to be displayed to notify that the program for which the automatic view function is established is about to be broadcast, instead of changing the current channel to the channel corresponding to the program for which the automatic view function is established.

The user may select a program from the broadcast program list of FIG. 5 in order to schedule recording of the selected program. Highlighted programs of FIG. 5 indicate programs selected to be scheduled for recording. In other words, "EastEnders", "Great British Menu", "The Simpsons" and "Dispatches" selected by the user may be scheduled for recording. The selected programs may be automatically recorded at their respective broadcast times, and stored as recorded program files in the storage unit 260. Additionally, the recorded program files may be added to sub-lists of a list "MY SCHEDULE" shown in FIG. 6.

The controller 250 may provide a function of displaying only the selected programs. Here, the selected programs may be arranged in the broadcast time order. Additionally, the controller 250 may automatically arrange the selected programs so that the selected programs may be displayed together with other programs in the same series as the selected programs. The controller 250 may also cause subsequent episodes of the selected programs to be automatically recommended.

In order to record programs broadcast on other channels in the same time slot, the broadcast receiver 210 may need to include more than two tuners. For example, in order to record both "Great British Menu" and "The Simpsons" in the same time slot, the broadcast receiver 210 should include at least two tuners.

Accordingly, if the broadcast receiver 210 includes N tuners, and if more than N programs in the same time slot are selected to schedule for recording, the controller 250 may provide a feedback message to notify that it is impossible to select more than N programs in the same time slot. Additionally, under the control of the controller 250, the same program (for example, a rebroadcast program) in other time slots may be recommended along with the feedback message.

Accordingly, the programs selected by the user may be added to the sub-lists of the list "MY SCHEDULE". Hereinafter, the sub-lists displayed on the screen will be described in detail with reference to FIG. 6. FIG. 6 shows the configuration of the screen which displays the sub-lists for each playback time of recorded program files, according to another exemplary embodiment of the present invention.

As shown in FIG. 6, the list "MY SCHEDULE" comprises a sub-list name display field 610 and a program display field 620. The current date and time as 6:47, January 6, 2008, may be shown at the top of the right-hand edge of the screen. Additionally, the playback date and time of programs in currently displayed sub-lists may appear above the sub-list name display field 610. For example, as shown in FIG. 6, a recorded program file containing "Great British Menu" may be played back between 9:30 and 10:30, January 7, 2008, on "MY CHANNEL 1 ".

GUIs representing the sub-lists of FIG. 6 may have the same form as or a similar form to the GUI representing the broadcast program list of FIG. 5. In other words, the sub-list name display field 610 and program display field 620 are displayed according to the playback time in the sub-lists of FIG. 6, in the same manner as that the channel display field 510 and program display field 520 are displayed according to the broadcast time in the broadcast program list of FIG. 5. Accordingly, GUIs showing sub-lists may have the same form as GUIs showing broadcast program lists, so the user can easily use the sub-lists in such a manner that he or she usually uses EPG information.

Since four programs, namely "EastEnders", "Great British Menu", "The Simpsons" and "Dispatches", are selected from the broadcast program list of FIG. 5, the list "MY SCHEDULE" of FIG. 6 includes these four programs.

The sub-list name display field 610 shows the name of sub-lists. For example, the sub-lists may be named as "MY CHANNEL 1", "MY CHANNEL 2" and "MY CHANNEL 3". Accordingly, the sub-lists may function as personal channels on which the playback time of the recorded programs is set by the user.

The program display field 620 displays the selected programs according to their playback time slots. The playback times of the selected programs may be set by the user, or if the user does not set a playback time, the controller 250 may cause the selected programs to be automatically broadcast in empty time slots, that is unassigned time slots.

The user may edit a sub-list of programs currently being played back and the playback time of programs in the program display field 620. For example, if the user clicks on "EastEnders" and drags "EastEnders" to a time slot between 11:00 and 11:30 of "MY CHANNEL 3", "EastEnders" may be set to be played back on "MY CHANNEL 3" between 11:00 and 11:30.

Additionally, the user may add sub-lists, and change the display order of the sub-lists. For example, the sub-lists and the programs contained in each of the sub-lists may be displayed in the order of the viewing frequency of the programs in the sub-lists or in the order of the number of programs in the sub-lists.

A process by which the user selects a program to be recorded and registers the selected program in the list "MY SCHEDULE" is exemplarily described with reference to FIGS. 5 and 6. If the user selects "EastEnders" from the program display field 520 of FIG. 5, a window may be displayed which enables the user to input the playback time and name of a sub-list for the recorded episode of "EastEnders". Here, the user may input "MY CHANNEL 1" and "between 10:30 and 11:00 on Tuesday, January 7, 2008". Accordingly, "EastEnders" may be registered to be played back on "MY CHANNEL 1" between 10:30 and 11:00 on Tuesday, January 7, 2008.

The user may thereby create a sub-list so that a program scheduled for recording may be played back in a desired time slot. Additionally, the user can view the program scheduled for recording at the desired time slot more conveniently.

Although only the broadcast programs are selected from the broadcast program list of FIG. 5 in this exemplary embodiment of the present invention, it is also possible to select broadcast programs from the video file list which is provided by the Internet or stored in the storage unit. For example, if the user selects File 1 and sets the playback time to be between 9:30 and 10:00 on "MY CHANNEL 3", the set playback time may be registered on the list "MY SCHEDULE". Additionally, the controller 250 may download File 1 from "YAHOO. COM" or download real time streams, and set File 1 to be played back at 9:30, January 7, 2008.

Additionally, the multimedia content list is displayed on the TV 200 in this exemplary embodiment of the present invention, but the present invention is applicable to any broadcast receiving apparatus capable of receiving broadcasts instead of the TV 200. Besides the TV 200, the broadcast receiving apparatuses may be a mobile phone or a navigation device having a broadcast receiving function.

As described above, the exemplary embodiments of the present invention provide a method of providing the multimedia content list of video files stored in the external device and broadcast programs, and the broadcast receiving apparatus using the method, so that the user may use TV multimedia content more conveniently.

Additionally, the exemplary embodiments of the present invention provide a method of providing the sub-list of the selected programs using the EPG information and the broadcast receiving apparatus using the method, so the user can view the selected programs with greater convenience.

Furthermore, the user may check both the broadcast program list and the video file list stored in the external device on a single screen, and it is thus possible to view video files stored in the external device more easily.

Moreover, the user may set the playback time of the recorded program files of programs scheduled for recording in advance, and accordingly, the user can view the recorded program files using his own channels.

Although a few preferred embodiments have been shown and described, it will be appreciated by those skilled in the art that various changes and modifications might be made without departing from the scope of the invention, as defined in the appended claims.

## Claims

1. A method of providing a multimedia content list and a sub-list, the method comprising:
generating a broadcast program list using electronic program guide (EPG) information;
extracting a video file list of video files stored in a storage medium or an external device (S330); and
displaying a multimedia content list comprising the generated broadcast program list and the extracted video file list on a screen (S340); and further comprising:
receiving a user selection of broadcast programs and video files from the multimedia content list (S410);
generating one or more sub-lists, each sub-list comprising the broadcast programs and the video files from the received selection (S420); and
displaying the sub-lists and displaying the broadcast programs and video files contained therein at the same time, with the sub-lists in spatially sequential arrangement, and the broadcast programs and video files within each sub-list in spatially sequential arrangement according to a playback time scheduled therefor (S440).

2. The method as claimed in claim 1, wherein each external device or storage medium of the external device is listed separately in the video file list.

3. The method as claimed in claim 1 or 2, wherein the storage medium or the external device is listed collectively in the video file list.

4. The method as claimed in any one of claims 1 to 3, wherein, if the external device is connected via the Internet, each list item in the video file list refers to each web site in the video file list.

5. The method as claimed in claim 4, wherein graphical user interfaces (GUIs) representing the sub-lists have a same format a GUI representing the broadcast program list.

6. The method as claimed in any one of claims 1 to 4, further comprising:
if the selected programs are broadcast, recording the programs and storing the recorded programs as recorded program files (S460);
setting playback times of the programs contained in each of the sub-lists; and
playing back a recorded program file containing a program, wherein a playback time of the program corresponds to a current time (S480).

7. The method as claimed in claim 6, wherein the setting comprises:
if a user inputs a specific time to play back a program, setting the playback time of the program to be the specific time; and
if the user does not input a specific time to play back a program, automatically setting a time unassigned as the playback time of the program.

8. The method as claimed in any one of claims 1 to 7, wherein the displaying comprises displaying the sub-lists and the programs contained in each of the sub-lists in an order of a viewing frequency of the programs in the sub-lists or in an order of a number of programs in the sub-lists.

9. A broadcast receiving apparatus comprising:
a broadcast receiver (210) which receives electronic program guide (EPG) information;
an interface unit (240) which is connected to an external device; and
a controller (250) which generates a broadcast program list using the EPG information, extracts a video file list of video files stored in a medium or the external device, and causes a multimedia content list comprising the generated broadcast program list and the extracted video file list to be displayed on a screen, wherein controller (250) is arranged to receive a user selection of broadcast programs and video files from the multimedia content list; generate one or more sub-lists, each sub-list comprising the broadcast programs and the video files from the received selection; and to display the sub-lists and the broadcast programs and video files contained therein at the same time, with the sub-lists in spatially sequential arrangement, and the broadcast programs and video files within each sub-list in spatially sequential arrangement according to a playback time scheduled therefor.

10. The broadcast receiving apparatus as claimed in claim 9, wherein each external device or storage medium of the external device is listed separately in the video file list.

11. The broadcast receiving apparatus as claimed in claim 9 or 10, wherein the storage medium or the external device is listed collectively in the video file list.

12. The broadcast receiving apparatus as claimed in any one of claims 9 to 11, wherein, if the external device is connected via the Internet, each list item of the video file list refers to each web site in the video file list.

## Patentansprüche

1. Verfahren zum Bereitstellen einer Multimedia-Inhaltsliste und einer Subliste, wobei das Verfahren Folgendes umfasst:
Erzeugen einer Ausstrahlungs-Programmliste unter Verwendung von Informationen de r elektronischen Programmzeitschrift (EPG);
Extrahieren einer Videodateiliste von in einem Speichermedium oder ei n e r externen Einrichtung gespeicherten Videodateien (S330); und
Anzeigen einer Multimedia-Inhaltsliste, die die erzeugte Ausstrahlungs-Programmliste un d die extrahierte Videodateiliste umfasst, au f einem Bildschirm (S340); und ferner Folgendes umfasst:
Empfangen einer Benutzerauswahl von Ausstrahlungs-Programmen und/oder Videodateien aus der Multimedia-Inhaltsliste (S410);
Erzeugen einer oder mehrerer Sublisten, wobei jede Sublist e die Ausstrahlungs-Programme und/oder die Videodateien aus der empfangenen Auswahl umfasst (S420); und
Anzeigen de r Sublisten un d Anzeigen der Ausstrahlungs-Programme und/oder der Videodateien mit den Sublisten in räumlich sequenzieller Anordnung und den Ausstrahlungs-Programmen und/oder Videodateien in jeder Subliste in räumlich sequenzieller Anordnung gemäß einer dafür eingeplanten Wiedergabezeit (S440).

2. Verfahren nach Anspruch 1, wobei jede externe Einrichtung oder jedes Speichermedium der externen Einrichtung separat in der Videodateiliste aufgelistet wird.

3. Verfahren nach Anspruch 1 oder 2, wobei das Speichermedium oder die externe Einrichtung kollektiv in der Videodateiliste aufgelistet wird.

4. Verfahren nach einem der Ansprüche 1 bis 3, wobei, wenn die externe Einrichtung über das Internet verbunden ist, jeder Listenposten in der Videodateiliste auf jede Website in der Videodateiliste verweist.

5. Verfahren nach Anspruch 4, wobei grafische Benutzeroberflächen (GUI), die die Sublisten repräsentieren, ein selbes Format aufweisen, wobei eine GUI die Ausstrahlungs-Programmliste repräsentiert.

6. Verfahren nach einem der Ansprüche 1 bis 4, das ferner Folgendes umfasst:
wenn die ausgewählten Programme ausgestrahlt werden, Aufzeichnen der Programme und Speichern der aufgezeichneten Programme als aufgezeichnete Programmdateien (S460);
Einstellen von Wiedergabezeiten der in jeder der Sublisten erteilten Programme; und
Wiedergeben einer aufgezeichneten Programmdatei, die ein Programm enthält, wobei eine Wiedergabezeit des Programms einer aktuellen Zeit entspricht (S480).

7. Verfahren nach Anspruch 6, wobei das Einstellen Folgendes umfasst:
wenn ein Benutzer eine spezifische Zeit zum Wiedergeben eines Programms eingibt, Einstellen der Wiedergabezeit des Programms auf die spezifische Zeit; und
wenn der Benutzer keine spezifische Zeit zur Wiedergabe eines Programms eingibt, automatisches Einstellen einer nichtzugewiesenen Zeit als die Wiedergabezeit des Programms.

8. Verfahren nach einem der Ansprüche 1 bis 7, wobei das Anzeigen Folgendes umfasst: Anzeigen der Sublisten und der Programme, die in jeder der Sublisten enthalten sind, in einer Reihenfolge einer Betrachtungshäufigkeit der Programme in den Sublisten oder in einer Reihenfolge einer Anzahl von Programmen in den Sublisten.

9. Ausstrahlungs-Empfangsvorrichtung, umfassend:
einen Ausstrahlungs-Empfänger (210), der Informationen der elektronischen Programmzeitschrift (EPG) empfängt;
eine Schnittstelleneinheit (240), die mit einer externen Einrichtung verbunden ist; und
eine Steuerung (250), die unter Verwendung der EPG-Informationen ei n e Ausstrahlungs-Programmliste erzeugt, eine Videodateiliste von in einem Medium oder der externen Einrichtung gespeicherten Videodateien extrahiert un d bewirkt, da s s ei n e Multimedia-Inhaltsliste, die die erzeugte Ausstrahlungs-Programm-liste und die extrahierte Videodateiliste umfasst, auf einem Bildschirm angezeigt wird, wobei die Steuerung (250) dafür ausgelegt ist, eine Benutzerauswahl von Ausstrahlungs-Programmen und/oder Videodateien aus der Multimedia-Inhaltsliste zu empfangen; eine oder mehrere Sublisten zu erzeugen, wobei jede Subliste die Ausstrahlungs-Programme und/oder die Videodateien aus der empfangenen Auswahl umfasst; und die Sublisten und die Ausstrahlungs-Programme und/oder Videodateien, die darin enthalten sind, mit den Sublisten in räumlich sequenzieller Anordnung und den Ausstrahlungs-Programmen und/oder Videodateien in jeder Subliste in räumlich sequenzieller Anordnung gemäß einer dafür eingeplanten Wiedergabezeit anzuzeigen.

10. Ausstrahlungs-Empfangsvorrichtung nach Anspruch 9, wobei 1 jede externe Einrichtung oder jedes Speichermedium der externen Einrichtung separat in der Videodateiliste aufgelistet wird.

11. Ausstrahlungs-Empfangsvorrichtung nach Anspruch 9 oder 10, wobei das Speichermedium oder die externe Einrichtung kollektiv in de r Videodateiliste aufgelistet wird.

12. Ausstrahlungs-Empfangsvorrichtung nach einem der Ansprüche 9 bis 11, wobei, wenn die externe Einrichtung über das Internet verbunden ist, jeder Listenposten der Videodateiliste auf jede Website in der Videodateiliste verweist.

## Revendications

1. Procédé pour fournir une liste de contenu multimédia et une sous-liste, le procédé comportant les étapes consistant à :
générer une liste des programmes diffusés en utilisant des informations de guide électronique des programmes (EPG) ;
extraire une liste de fichiers vidéo constituée de fichiers vidéo conservés dans un support de stockage ou un dispositif externe (S330) ; et
afficher sur un écran une liste de contenu multimédia comportant la liste des programmes diffusés générée et la liste de fichiers vidéo extraite (S340) ; et comportant en outre les étapes consistant à :
recevoir une sélection par l'utilisateur de programmes diffusés et / ou de fichiers vidéo issus de la liste de contenu multimédia (S410) ;
générer une ou plusieurs sous-listes, chaque sous-liste comportant les programmes diffusés et / ou les fichiers vidéo issus de la sélection reçue (S420) ; et
afficher les sous-listes et afficher les programmes diffusés et / ou les fichiers vidéo, les sous-listes se trouvant dans une disposition spatiale séquentielle, et les programmes diffusés et / ou les fichiers vidéo au sein de chaque sous-liste se trouvant dans une disposition spatiale séquentielle selon une heure de lecture programmée à cet effet (S440).

2. Procédé selon la revendication 1, chaque dispositif externe ou support de stockage du dispositif externe étant listé séparément dans la liste de fichiers vidéo.

3. Procédé selon la revendication 1 ou 2, le support de stockage ou le dispositif externe étant listé collectivement dans la liste de fichiers vidéo.

4. Procédé selon l'une quelconque des revendications 1 à 3, **caractérisé en ce que**, si le dispositif externe est connecté via Internet, chaque élément de liste figurant dans la liste de fichiers vidéo fait référence à chaque site Web dans la liste de fichiers vidéo.

5. Procédé selon la revendication 4, **caractérisé en ce que** des interfaces graphiques d'utilisateur (GUI) représentant les sous-listes se présentent sous le même format qu'une GUI représentant la liste des programmes diffusés.

6. Procédé selon l'une quelconque des revendications 1 à 4, comportant en outre les étapes consistant :
si les programmes sélectionnés sont diffusés, à enregistrer le s programmes et à conserver les programmes enregistrés e n tant que fichiers de programmes enregistrés (S460) ;
à régler des heures de lecture des programmes figurant dans chacune des sous-listes ; et
à lire un fichier de programme enregistré contenant un programme, lorsqu'une heure de lecture du programme correspond à l'heure actuelle (S480).

7. Procédé selon la revendication 6, le réglage comportant les étapes consistant :
si un utilisateur saisit une heure spécifique pour lire un programme, à régler l'heure de lecture du programme à l'heure spécifique ; et
si l'utilisateur ne saisit pas d'heure spécifique pour lire un programme, à régler automatiquement une heure non affectée en tant qu'heure de lecture du programme.

8. Procédé selon l'une quelconque des revendications 1 à 7, l'affichage comportant les étapes consistant à afficher les sous-listes et les programmes figurant dans chacune des sous-listes par ordre de fréquence de visualisation des programmes figurant dans les sous-listes ou par ordre de nombre de programmes dans les sous-listes.

9. Appareil de réception d'émissions comportant :
un récepteur (210) d'émissions qui reçoit des informations de guide électronique des programmes (EPG) ;
une unité (240) d'interface qui est reliée à un dispositif externe ; et
une commande (250) qui génère une liste des programmes diffusés en utilisant les informations d'EPG, extrait une liste de fichiers vidéo constituée de fichiers vidéo conservés dans un support ou le dans dispositif externe, et provoque l'affichage sur un écran une liste d e contenu multimédia comportant la liste des programmes diffusés générée et la liste de fichiers vidéo extraite, la commande (250) étant configurée pour recevoir une sélection par l'utilisateur de programmes diffusés et / ou de fichiers vidéo issus de la liste de contenu multimédia ; générer une ou plusieurs sous-listes, chaque sous-liste comportant les programmes diffusés et / ou les fichiers vidéo issus de la sélection reçue ; et afficher les sous-listes et les programmes diffusés et / ou les fichiers vidéo qui y figurent, les sous-listes se trouvant dans une disposition spatiale séquentielle, et les programmes diffusés et / ou les fichiers vidéo au sein de chaque sous-liste se trouvant dans une disposition spatiale séquentielle selon une heure de lecture programmée à cet effet.

10. Appareil de réception d'émissions selon la revendication 9, chaque dispositif externe ou support d e stockage d u dispositif externe étant listé séparément dans la liste de fichiers vidéo.

11. Appareil de réception d'émissions selon la revendication 9 ou 10, le support de stockage ou le dispositif externe étant listé collectivement dans la liste de fichiers vidéo.

12. Appareil de réception d'émissions selon l'une quelconque des revendications 9 à 11, **caractérisé en ce que**, s i le dispositif externe est connecté via Internet, chaque élément de liste figurant dans la liste de fichiers vidéo fait référence à chaque site Web dans la liste de fichiers vidéo.
